# EUROPEAN PATENT APPLICATION

(11) **EP 4 412 292 A1**
(43) Date of publication of application: **07.08.2024**
(21) Application number: 21959420.7
(22) Date of filing: 30.09.2021
(51) Int. Cl.: H04W 24/10

(54) **TERMINAL, RADIO COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); CHEN, Lan, Beijing 100190 (CN)
(74) Representative: Hoffmann Eitle
(86) International application number: PCT/JP2021/036243
(87) International publication number: WO 2023/053385

(57) **Abstract**

A terminal according to an aspect of the present disclosure includes: a receiving section that receives a codebook configuration including a codebook subset restriction (CBSR) configuration corresponding to a channel state information (CSI) measurement for single transmission/reception point (single-TRP) and a CBSR configuration corresponding to a CSI measurement for non-coherent joint transmission (NCJT); and a control section that controls, based on each CBSR configuration, a corresponding CSI measurement. An aspect of the present disclosure allows an appropriate codebook configuration to be applied.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), a case where one or a plurality of transmission/reception points (TRPs) (multiple TRPs (multi-TRP (MTRP))) perform DL transmission to a terminal (user terminal, User Equipment (UE)) by using one or a plurality of panels (multi-panel) is under study. As a mode of multi-TRP transmission, non-coherent joint transmission (NCJT) may be used.

However, it is not clear what codebook configuration is to be performed for a UE when performing at least one measurement of a CSI measurement with NCJT applied and a CSI measurement with a single TRP (single-TRP) applied. Unless an appropriate codebook configuration is applied, communication throughput may be reduced.

In view of this, an object of the present disclosure is to provide a terminal, a radio communication method, and a base station that allow an appropriate codebook configuration to be applied.

### Solution to Problem

A terminal according to an aspect of the present disclosure includes: a receiving section that receives a codebook configuration including a codebook subset restriction (CBSR) configuration corresponding to a channel state information (CSI) measurement for single transmission/reception point (single-TRP) and a CBSR configuration corresponding to a CSI measurement for non-coherent joint transmission (NCJT); and a control section that controls, based on each CBSR configuration, a corresponding CSI measurement.

### Advantageous Effects of Invention

An aspect of the present disclosure allows an appropriate codebook configuration to be applied.

### Brief Description of Drawings

[FIG. 1] FIG. 1 is a diagram to show a codebook configuration (CodebookConfig) in Rel. 15.
[FIG. 2] FIG. 2 is a diagram to show a codebook configuration (CodebookConfig) in Rel. 16.
[FIG. 3] FIG. 3 is a diagram to show a part of a CSI report configuration (CSI-ReportConfig) in Rel. 16.
[FIG. 4] FIG. 4 is a diagram to show an overview of embodiments/aspects of the present disclosure.
[FIG. 5] FIG. 5 is a diagram to show a first example of a codebook configuration of Aspect 1-1.
[FIG. 6] FIG. 6 is a diagram to show a second example of the codebook configuration of Aspect 1-1.
[FIG. 7] FIG. 7 is a diagram to show a first example of a codebook configuration of Aspect 1-2.
[FIG. 8] FIG. 8 is a diagram to show a second example of the codebook configuration of Aspect 1-2.
[FIG. 9] FIG. 9 is a diagram to show a first example of a codebook configuration of Aspect 1-3.
[FIG. 10] FIG. 10 is a diagram to show a second example of the codebook configuration of Aspect 1-3.
[FIG. 11] FIG. 11 is a diagram to show a first example of a codebook configuration of Aspect 1-4.
[FIG. 12] FIG. 12 is a diagram to show a second example of the codebook configuration of Aspect 1-4.
[FIG. 13] FIG. 13 is a diagram to show a first example of a codebook configuration of Aspect 1-5.
[FIG. 14] FIG. 14 is a diagram to show a second example of the codebook configuration of Aspect 1-5.
[FIG. 15] FIG. 15 is a diagram to show an example of a codebook configuration according to a second embodiment, the example corresponding to the first example of Aspect 1-1.
[FIG. 16] FIG. 16 is a diagram to show an example of the codebook configuration according to the second embodiment, the example corresponding to the second example of Aspect 1-1.
[FIG. 17] FIG. 17 is a diagram to show an example of a schematic structure of a radio communication system according to one embodiment.
[FIG. 18] FIG. 18 is a diagram to show an example of a structure of a base station according to one embodiment.
[FIG. 19] FIG. 19 is a diagram to show an example of a structure of a user terminal according to one embodiment.
[FIG. 20] FIG. 20 is a diagram to show an example of a hardware structure of the base station and the user terminal according to one embodiment.
[FIG. 21] FIG. 21 is a diagram to show an example of a vehicle according to one embodiment.

### Description of Embodiments

### (CSI Report (or Reporting))

In Rel-15 NR, a terminal (also referred to as a user terminal, a User Equipment (UE), and the like) generates (also referred to as determines, calculates, estimates, measures, and the like) channel state information (CSI), based on a reference signal (RS) (or a resource for the RS), and transmits (also referred to as reports, feeds back, and the like) the generated CSI to a network (for example, a base station). The CSI may be transmitted to the base station by using an uplink control channel (for example, a Physical Uplink Control Channel (PUCCH)) or an uplink shared channel (for example, Physical Uplink Shared Channel (PUSCH)), for example.

The RS used for the generation of the CSI may be at least one of a channel state information reference signal (CSI-RS), a synchronization signal/broadcast channel (Synchronization Signal/Physical Broadcast Channel (SS/PBCH)) block, a synchronization signal (SS), a demodulation reference signal (DMRS), and the like, for example.

The CSI-RS may include at least one of a non-zero power (NZP) CSI-RS and CSI-Interference Management (CSI-IM). The SS/PBCH block is a block including the SS and the PBCH (and a corresponding DMRS), and may be referred to as an SS block (SSB) or the like. The SS may include at least one of a primary synchronization signal (PSS) and a secondary synchronization signal (SSS).

Note that the CSI may include at least one of a channel quality indicator (CQI), a precoding matrix indicator (PMI), a CSI-RS resource indicator (CRI), an SS/PBCH block resource indicator (SSBRI), a layer indicator (LI), a rank indicator (RI), L1-RSRP (reference signal received power in Layer 1) (Layer 1 Reference Signal Received Power), L1-RSRQ (Reference Signal Received Quality), an L1-SINR (Signal to Interference plus Noise Ratio), an L1-SNR (Signal to Noise Ratio), and the like.

The UE may receive information related to a CSI report (report configuration information) and control the CSI report on the basis of the report configuration information. The report configuration information may be, for example, a radio resource control (RRC) information element (IE) "CSI-ReportConfig". Note that, in the present disclosure, the RRC IE may be interchangeably interpreted as an RRC parameter, a higher layer parameter, and the like.

The report configuration information (for example, the RRC IE "CSI-ReportConfig") may include at least one of the following, for example.
- Information (report type information, for example, an RRC IE "reportConfigType") related to a type of the CSI report
- Information (report quantity information, for example, an RRC IE "reportQuantity") related to one or more quantities (one or more CSI parameters) of the CSI to be reported
- Information (resource information, for example, an RRC IE "CSI-ResourceConfigId") related to the resource for the RS used for generation of the quantity (the CSI parameter)
- Information (frequency domain information, for example, an RRC IE "reportFreqConfiguration") related to the frequency domain being a target of the CSI report

For example, the report type information may indicate a periodic CSI (P-CSI) report, an aperiodic CSI (A-CSI) report, or a semi-persistent (semi-permanent) CSI report (SP-CSI) report.

The report quantity information may specify at least one combination of the CSI parameters described above (for example, CRI, RI, PMI, CQI, LI, L1-RSRP, and the like).

The resource information may be an ID of the resource for the RS. The resource for the RS may include, for example, a non-zero power CSI-RS resource or SSB, and a CSI-IM resource (for example, a zero power CSI-RS resource).

The frequency domain information may indicate a frequency granularity of the CSI report. The frequency granularity may include, for example, a wideband and a subband. The wideband is the entire CSI reporting band. The wideband may be, for example, the entire certain carrier (component carrier (CC), cell, serving cell), or may be the entire bandwidth part (BWP) in the certain carrier. The wideband may be interpreted as CSI reporting band, the entire CSI reporting band, and the like.

The subband may be part of the wideband and constituted of one or more resource blocks (RBs) or physical resource blocks (PRBs). The size of the subband may be determined according to the size of the BWP (the number of PRBs).

The frequency domain information may indicate which of a wideband or subband PMI is to be reported (for example, the frequency domain information may include an RRC IE "pmi-FormatIndicator" used to determine whether the reporting is wideband PMI reporting or subband PMI reporting). The UE may determine the frequency granularity (in other words, either of wideband PMI reporting or subband PMI reporting) for the CSI report, on the basis of at least one of the report quantity information and the frequency domain information.

If wideband PMI reporting is configured (determined), one wideband PMI may be reported for the entire CSI reporting band. On the other hand, if subband PMI reporting is configured, a single wideband indication i₁ may be reported for the entire CSI reporting band, and a subband indication (one subband indication) i₂ for each of one or more subbands (for example, subband indication for each subband) in the entire CSI reporting may be reported.

The UE performs channel estimation by using the received RS to estimate a channel matrix H. The UE feeds back an index (PMI) determined based on the estimated channel matrix.

The PMI may indicate a precoder matrix (also simply referred to as a precoder) that the UE considers appropriate for the use for downlink (DL) transmission to the UE. Each value of the PMI may correspond to one precoder matrix. A set of values of the PMI may correspond to a different set of precoder matrices referred to as a precoder codebook (also simply referred to as a codebook).

In the space domain, the CSI report may include one or more types of CSI. For example, the CSI may include at least one of a first type (Type 1 CSI) to be used for selection of a single beam and a second type (Type 2 CSI) to be used for selection of multi-beam. The single beam may be interpreted as a single layer, and the multi-beam may be interpreted as a plurality of beams. Type 1 CSI may be configured not to assume multi-user multiple input multiple outpiut (MIMO) and Type 2 CSI may be configured to assume multi-user MIMO.

The codebook may include a codebook for Type 1 CSI (also referred to as Type 1 codebook or the like) and a codebook for Type 2 CSI (also referred to as Type 2 codebook or the like). Type 1 CSI may include Type 1 single-panel CSI and Type 1 multi-panel CSI, for which respective different codebooks (Type 1 single-panel codebook and Type 1 multi-panel codebook) may be defined.

In the present disclosure, Type 1 and Type I may be interchangeably interpreted. In the present disclosure, Type 2 and Type II may be interchangeably interpreted.

An uplink control information (UCI) type may include at least one of a Hybrid Automatic Repeat reQuest ACKnowledgement (HARQ-ACK), a scheduling request (SR), and CSI. The UCI may be delivered on a PUCCH, or may be delivered on a PUSCH.

In Rel-15 NR, the UCI may include one CSI part for wideband PMI feedback. CSI report #n includes PMI wideband information, if reported.

In Rel-15 NR, the UCI may include two CSI parts for subband PMI feedback. CSI part 1 includes wideband PMI information. CSI part 2 includes one piece of wideband PMI information and some pieces of subband PMI information. CSI part 1 and CSI part 2 are coded separately.

In Rel-15 NR, the UE may be configured with reporting setting of N (N ≥ 1) CSI report configurations and resource setting of M (M ≥ 1) CSI resource configurations, by a higher layer. For example, the CSI report configurations (CSI-ReportConfig) include resources for channel measurement setting (resourcesForChannelMeasurement), CSI-IM resource for interference setting (csi-IM-ResourceForInterference), NZP-CSI-RS for interference setting (nzp-CSI-RS-ResourceForInterference), report quantity (reportQuantity), and the like. Each of the resources for channel measurement setting, the CSI-IM resource for interference setting, and the NZP-CSI-RS for interference setting is associated with a CSI resource configuration (CSI-ResourceConfig, CSI-ResourceConfigId). The CSI resource configurations include a list of CSI-RS resources sets (csi-RS-ResourceSetList, for example, NZP-CSI-RS resource set or CSI-IM resource set).

For both of FR1 and FR2, in order to enable more dynamic channel/interference hypotheses for NCJT, evaluation and definition of CSI reporting for DL transmission for at least one of multi-TRP and multi-panel are under study.

### (Multi-TRP)

For NR, it is under study that one or a plurality of transmission/reception points (TRPs) (multiple TRPs (multi-TRP (MTRP))) perform DL transmission to a UE by using one or a plurality of panels (multi-panel). It is also under study that a UE performs UL transmission to one or a plurality of TRPs by using one or a plurality of panels.

Note that the plurality of TRPs may correspond to the same cell identifier (ID) or may correspond to different cell IDs. The cell ID(s) may be physical cell ID(s) or may be virtual cell ID(s).

Multiple TRPs (TRPs #1 and #2) may be connected to each other by means of an ideal/non-ideal backhaul, and information, data, or the like may be communicated between the multiple TRPs. Each TRP of the multiple TRPs may transmit a different codeword (Code Word (CW)) and a different layer. As a mode of multi-TRP transmission, non-coherent joint transmission (NCJT) may be used.

In NCJT, for example, TRP 1 performs modulation mapping on a first codeword, performs layer mapping, and transmits a first PDSCH in layers of a first number (for example, two layers) by using first precoding. TRP 2 performs modulation mapping on a second codeword, performs layer mapping, and transmits a second PDSCH in layers of a second number (for example, two layers) by using second precoding.

Note that it may be defined that the plurality of PDSCHs (multiple PDSCHs) transmitted by NCJT partially or completely overlap with each other in at least one of time and frequency domains. In other words, the first PDSCH from the first TRP and the second PDSCH from the second TRP may overlap with each other in at least one of time and frequency resources.

The first PDSCH and second PDSCH may be assumed not to be in a quasi-co-location (QCL) relation (assumed to be not quasi-co-located). Reception of the multiple PDSCHs may be interpreted as simultaneous reception of PDSCHs of a QCL type other than a certain QCL type (for example, QCL type D).

The plurality of PDSCHs from the multiple TRPs (which may be referred to as multiple PDSCHs) may be scheduled using one piece of DCI (single DCI (S-DCI), single-PDCCH) (single master mode). The one piece of DCI may be transmitted from one TRP of the multiple TRPs. Each of the plurality of PDSCHs from the multiple TRPs may be scheduled using a respective one of a plurality of pieces of DCI (multi-DCI (M-DCI), multi-PDCCH (multiple PDCCHs)) (multi-master mode). Each of the plurality of pieces of DCI may be transmitted from a respective one of the multiple TRPs. For the TRPs different from each other, the UE may be assumed to separately transmit CSI report related to each of the TRPs. Such CSI feedback may be referred to as separate feedback, separate CSI feedback, and the like. In the present disclosure, "separate" may be interchangeably interpreted as "independent."

Note that CSI feedback in which a CSI report related to both the TRPs is transmitted to one of the TRPs may be used. Such CSI feedback may be referred to as joint feedback, joint CSI feedback, and the like.

For example, in a case of separate feedback, the UE is configured to transmit, to TRP #1, a CSI report for TRP #1 by using a certain PUCCH (PUCCH 1) and to transmit, to TRP #2, a CSI report for TRP #2 by using another PUCCH (PUCCH 2). In a case of joint feedback, the UE transmits, to TRP #1 or #2, a CSI report for TRP #1 and a CSI report for TRP #2.

Such a multi-TRP scenario allows more flexible transmission control using a channel of good quality.

### (Codebook Configuration)

A UE is configured with a parameter related to a codebook (codebook configuration (CodebookConfig)) by higher layer signaling (RRC signaling). The codebook configuration is included in a CSI report configuration (CSI-ReportConfig) of a higher layer (RRC) parameter.

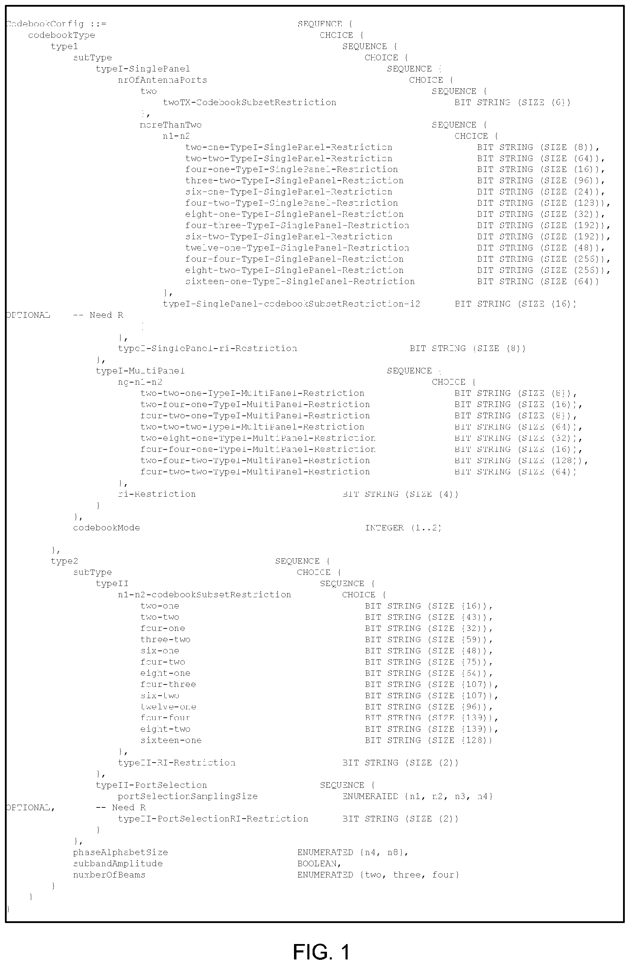

FIG. 1 is a diagram to show a codebook configuration (CodebookConfig) in Rel. 15. This example is described using Abstract Syntax Notation One (ASN.1) notation (note that this description is only for an example and thus may not be a complete description, but it is possible for a person skilled in the art to interpret this description into a complete description). In FIG. 1, the meaning of an RRC information element/parameter having the same name as that of an RRC information element/parameter already defined in Rel-15/16 NR specification (TS 38.331) is of course understood by a person skilled in the art. This applies to another similar drawing hereinafter.

In the codebook configuration, a codebook of at least one of Type 1 single-panel (typeI-SinglePanel), Type 1 multi-panel (typeI-MultiPanel), Type 2 (typeII), and Type 2 port selection (typeII-PortSelection) is selected.

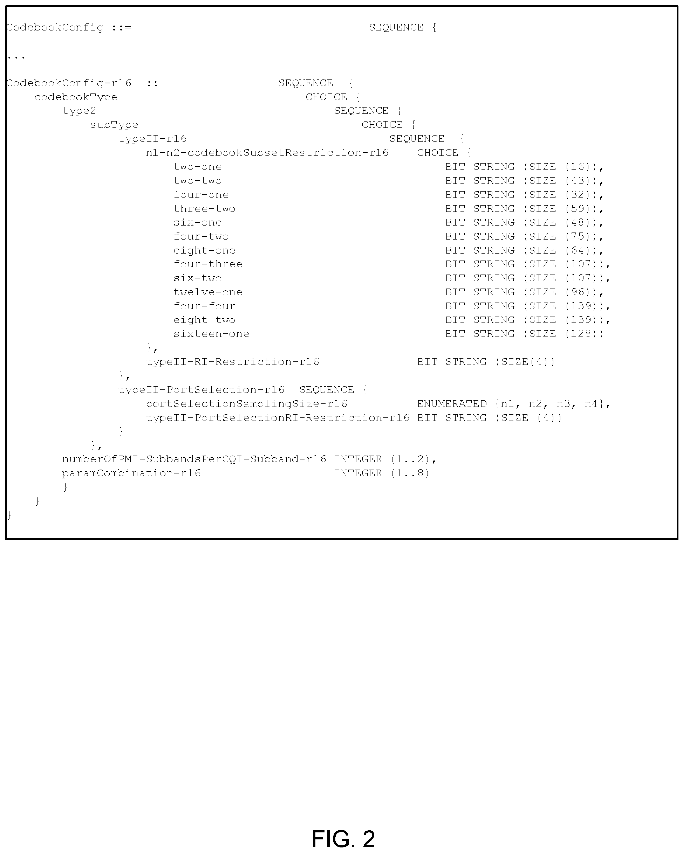

FIG. 2 is a diagram to show a codebook configuration (CodebookConfig) in Rel. 16. The codebook configuration in Rel. 16 includes, in addition to parameters in Rel. 15 shown in FIG. 1, parameters for Rel. 16 shown in FIG. 2 (parameters in CodebookConfig-r16). Parameters similar to those in FIG. 1 are omitted in illustration in FIG. 2.

As shown in FIGS. 1 and 2, parameters of the codebook include parameters related to codebook subset restrictions (CBSRs) ("... Restriction" in FIGS. 1 and 2). A CBSR configuration is a bit indicating what PMI report is allowed ("1") and what PMI report is not allowed ("0") with respect to a precoder associated with the bit of the CBSR. One bit of a CBSR bitmap corresponds to one codebook index/antenna port. Note that the CBSR in the present disclosure may correspond to at least one of each CBSR in Rel. 15 and Rel. 16 shown in FIG. 1 and FIG. 2 and a CBSR configured in Rel. 17 or later versions.

### (CSI Report Configuration)

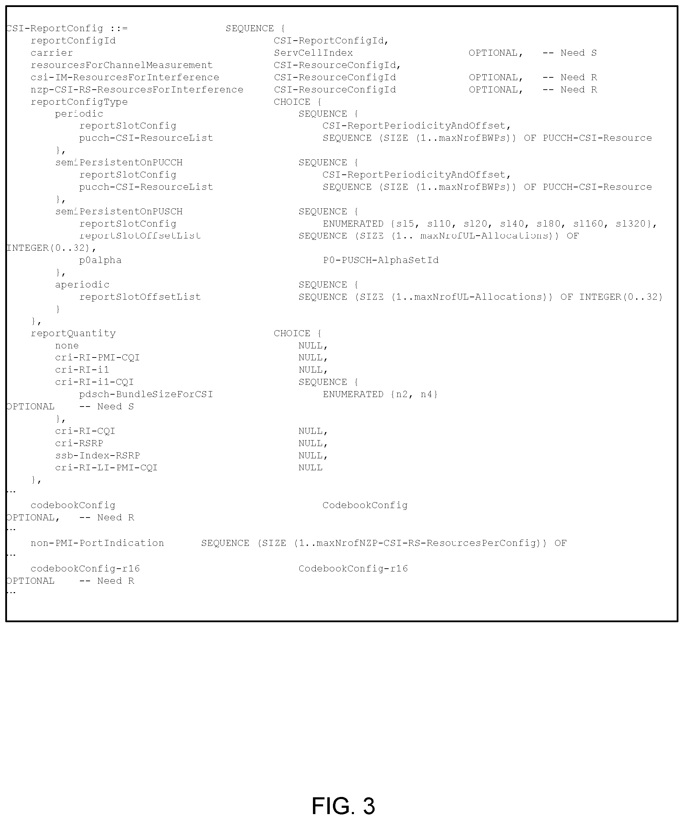

FIG. 3 is a diagram to show a part of a CSI report configuration (CSI-ReportConfig) in Rel. 16. The CSI report configuration shown in FIG. 3 includes, in addition to the codebook configuration (CodebookConfig) shown in FIG. 2, CSI-RS resources for channel measurement (resourcesForChannelMeasurement (CMR)), CSI-RS resources for interference measurement (csi-IM-ResourcesForInterference (ZP-IMR), nzp-CSI-RS-ResourcesForInterference (NZP-IMR)), and the like. Of the parameters shown in FIG. 3, parameters excepting codebookConfig-r16 are included also in the CSI report configuration in Rel. 15.

For Rel. 17, an enhanced CSI report configuration (CSI-ReportConfig) for multi-TRP CSI measurement/reporting using NCJT is under study. In such a CSI report configuration, two CMR groups each corresponding to a respective one of two TRPs are configured. A CMR in each of the CMR groups may be used for measurement of at least one of multi-TRP using NCJT and single-TRP. N pairs of CMRs for NCJT are configured by RRC signaling. A UE may be configured with whether to use a CMR of a CMR pair for a single-TRP measurement, by RRC signaling.

For a CSI report that is configured by a single CSI report configuration and that is related to an NCJT measurement of multi-TRP/panel, support of at least one of the following Option 1 and Option 2 is under study.

### <Option 1>

The UE is configured to report X (X = 0, 1, 2) pieces of CSI related to a single-TRP measurement hypothesis and one piece of CSI related to an NCJT measurement. In a case of X = 2, two pieces of CSI relate to two different single-TRP measurements using CMRs of different CMR groups.

### <Option 2>

The UE may be configured to report one piece of CSI related to the best measurement result in measurement hypotheses for NCJT and single-TRP.

As described above, in Rel. 15/16, a CBSR is configured for each codebook configuration of each CSI report configuration. In other words, the CBSR is applied to every CMR and the like in the corresponding CSI report configuration.

Note that, in a CSI report configuration for multi-TRP in Rel. 17 by a CSI report configuration, when Option 1 and/or Option 2 described above is applied, configuration for measurement as below may be performed.
Option 1 (X = 0): Measurement of only CSI for NCJT
Option 1 (X = 1): Measurement of CSI for NCJT and CSI for single-TRP (one TRP)
Option 1 (X = 2): Measurement of CSI for NCJT and CSI for single-TRP (two TRPs)
Option 2: Measurement of both of CSI for NCJT and CSI for single-TRP

In other words, at least one measurement of a CSI measurement with NCJT applied and a CSI measurement with single-TRP applied may be performed. When, however, an existing CBSR configuration is simply reused, the CBSR is to be applied to every CMR measured in different measurement hypotheses (NCJT/single-TRP). In this case, for the different measurement hypotheses (NCJT/single-TRP), an inappropriate codebook configuration may be applied.

In view of this, the inventors of the present invention came up with the idea of a terminal including: a receiving section that receives a codebook configuration including a codebook subset restriction (CBSR) configuration corresponding to a channel state information (CSI) measurement for single transmission/reception point (single-TRP) and a CBSR configuration corresponding to a CSI measurement for non-coherent joint transmission (NCJT); and a control section that controls, based on each CBSR configuration, a corresponding CSI measurement. According to an aspect of the present disclosure, the terminal is possible to apply an appropriate codebook configuration.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C".

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

A spatial relation information Identifier (ID) (TCI state ID) and spatial relation information (TCI state) may be interchangeably interpreted. "Spatial relation information" may be interchangeably interpreted as "a set of spatial relation information", "one or a plurality of pieces of spatial relation information", and the like. The TCI state and the TCI may be interchangeably interpreted.

In the present disclosure, NCJT, multi-TRP, NCJT using multi-TRP, multiple PDSCHs using NCJT, multiple PDSCHs, a plurality of PDSCHs from multi-TRP, and the like may be interchangeably interpreted. Note that multiple PDSCHs may mean a plurality of PDSCHs overlapping with one another in at least a part of the time resources (for example, one symbol), may mean a plurality of PDSCHs overlapping with one another in all of the time resources (for example, all symbols), may mean a plurality of PDSCHs not overlapping with one another at all in the time resources, may mean a plurality of PDSCHs carrying the same TB or same CW, or may mean a plurality of PDSCHs applied with different UE beams (spatial domain reception filters, QCL parameters).

In the present disclosure, multi-TRP, a channel using multi-TRP, a channel using a plurality of TCI states/spatial relations, multi-TRP being enabled by RRC/DCI, a plurality of TCI states/spatial relations being enabled by RRC/DCI, and at least one of multi-TRP based on single DCI and multi-TRP based on multi-DCI may be interchangeably interpreted. In the present disclosure, multi-TRP based on multi-DCI and one CORESET pool index (CORESETPoolIndex) value being configured for a CORESET may be interchangeably interpreted.

In the present disclosure, a normal TRP, single-TRP, S-TRP, a single-TRP system, single-TRP transmission, a single PDSCH, a channel using single-TRP, a channel using one TCI state/spatial relation, multi-TRP being not enabled by RRC/DCI, a plurality of TCI states/spatial relations being not enabled by RRC/DCI, one CORESET pool index (CORESETPoolIndex) value being not configured for any CORESET and any codepoint of a TCI field being not mapped to two TCI states, performing communication with one transmission/reception point, applying single-TRP, and only one TRP in multi-TRP performing transmission to a UE may be interchangeably interpreted.

In the present disclosure, TRP #1 (first TRP) may correspond to CORESET pool index = 0, or may correspond to a first TCI state of two TCI states corresponding to one codepoint of a TCI field. TRP #2 (second TRP) TRP #1 (first TRP) may correspond to CORESET pool index = 1, or may correspond to a second TCI state of the two TCI states corresponding to the one codepoint of the TCI field.

In the present disclosure, single DCI (sDCI), a single PDCCH, a multi-TRP system based on single DCI, sDCI-based MTRP, and two TCI states in at least one TCI codepoint being activated may be interchangeably interpreted.

In the present disclosure, multi-DCI (mDCI), multi-PDCCH, a multi-TRP system based on multi-DCI, mDCI-based MTRP, and two CORESET pool indices or CORESET pool index = 1 (or a value equal to one or greater) being configured may be interchangeably interpreted.

A single-TRP measurement, a single-TRP measurement hypothesis, and a CSI measurement for single-TRP may be interchangeably interpreted. An NCJT measurement, an NCJT measurement hypothesis, a CSI measurement for NCJT, and a CSI measurement for multi-TRP using NCJT may be interchangeably interpreted. A CSI measurement and a CSI report may be interchangeably interpreted.

In the present disclosure, a CMR pair may be, for example, a pair of a CMR (corresponding to TRP #1) in a first CMR group and a CMR (corresponding to TRP #2) in a second CMR group. A CBSR and a CBSR configuration may be interchangeably interpreted. The number of transmissions (TXs) in a codebook configuration in the present disclosure may correspond to the number of antenna ports. A CMR group and a TRP may be interchangeably interpreted. The first CMR group and the first TRP (TRP #1) may be interchangeably interpreted. The second CMR group and the second TRP (TRP #2) may be interchangeably interpreted.

### (Radio Communication Method)

In embodiments of the present disclosure, description is mainly made on enhancement of a CBSR configuration of Type 1 single-panel (typeI-SinglePanel), but the description is possible to be similarly applied to a CBSR configuration of Type 1 multi-panel (typeI-MultiPanel), a CBSR configuration of Type 2 (typeII), a CBSR configuration of Type 2 port selection (typeII-PortSelection), a new CBSR configuration to be defined in Rel. 17 or later versions, and the like. A configuration in each CBSR configuration (parameters, number of bits, and the like in the CBSR configuration) may be similar to that in Rel. 15/16.

A CSI report configuration (codebook configuration) may include a plurality of CBSR configurations. Each CBSR configuration corresponds to at least one of a CMR group (TRP) and a measurement hypothesis (single-TRP measurement or NCJT measurement).

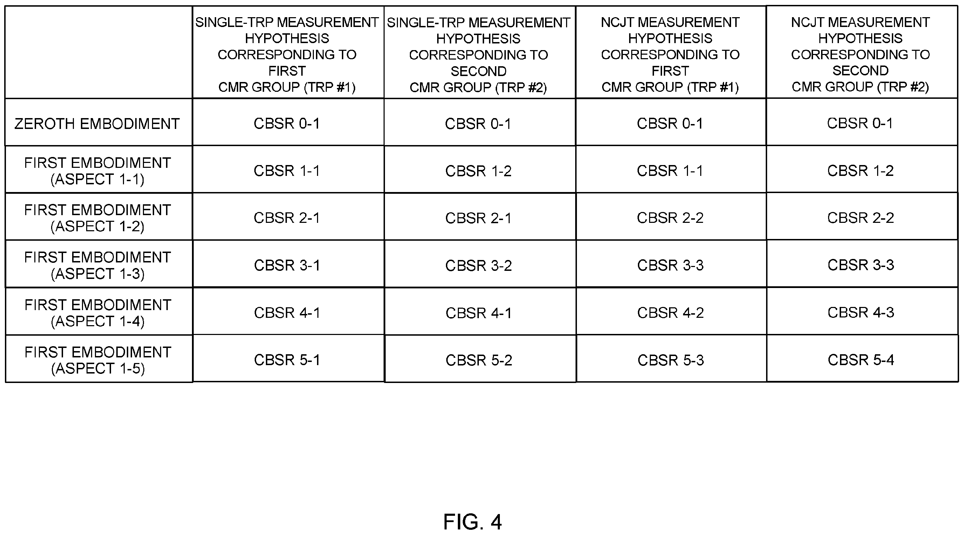

FIG. 4 is a diagram to show an overview of the embodiments/aspects of the present disclosure. FIG. 4 shows, in various cases, how CBSRs are configured in each embodiment/aspect. CBSR X-Y in FIG. 4 indicates a type of CBSR. With the same X and Y, it is indicated that the same (common) CBSR is configured. In other words, a zeroth embodiment has one type of CBSR configured, Aspect 1-1 and Aspect 1-2 of a first embodiment each have two types of CBSR configured, Aspect 1-3 and Aspect 1-4 of the first embodiment each have three types of CBSR configured, and Aspect 1-5 of the first embodiment has four types of CBSR configured. The detail of each embodiment/aspect will be described below.

### <Zeroth Embodiment>

A UE may receive a CSI report configuration corresponding to an existing (for example, Rel-15 or Rel-16) CBSR configuration by higher layer signaling and use the CSI report configuration for a CSI report. In this case, the UE may apply the CBSR configuration to both of single-TRP measurements (both TRP #1 and TRP #2) and an NCJT measurement (the UE may assume/interpret/determine to apply to both).

### <First Embodiment>

A UE may receive, by higher layer signaling, a codebook configuration (a CSI report configuration including the codebook configuration) including a CBSR configuration corresponding to a single-TRP measurement (a CSI measurement for single-TRP) and a CBSR configuration corresponding to an NCJT measurement (a CSI measurement for NCJT) and control, based on each CBSR configuration, a corresponding CSI measurement/report.

For the CBSR configuration in the codebook configuration, any one of the following Aspect 1-1 to Aspect 1-5 may be applied. Note that the codebook configuration indicated in each aspect may be applied to, for example, 3GPP Rel. 17 or Rel. 18 or later versions.

Note that the CBSR configuration in the present disclosure may be included in a configuration other than the codebook configuration. For example, the CBSR configuration in the present disclosure may be included in an RRC parameter related to multi-TRP, a PDSCH configuration (PDSCH-Config), a PDCCH configuration (PDCCH-Config), or the like.

The present disclosure is applicable to any one of Option 1 (X = 0, 1, 2) and Option 2 described above, and the same or different CBSR configuration may be applied to each option. A plurality of CBSR configurations in the present disclosure may be the same for each CMR/each CMR pair.

### [Aspect 1-1]

The UE may receive, by higher layer signaling, a codebook configuration including a CBSR configuration for each CMR group (TRP). For example, the UE applies a corresponding/related CBSR to a single-TRP measurement (corresponding to the first or second CMR group). With respect to an NCJT measurement corresponding to a CMR pair, the UE applies a first CBSR corresponding to the first CMR group to a CMR measurement of the first CMR group and applies a second CBSR corresponding to the second CMR group to a CMR measurement of the second CMR group.

In other words, in Aspect 1-1, the CBSR for the single-TRP measurement is common to the CBSR for the NCJT measurement, while the CBSRs may be different for each corresponding CMR group (TRP).

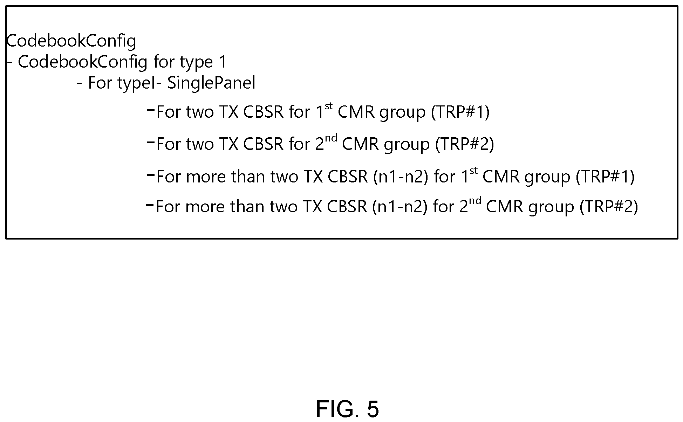

FIG. 5 is a diagram to show a first example of the codebook configuration of Aspect 1-1. In the example of FIG. 5, a second configuration for Type 1 single-panel includes a two-transmission (transmission using two ports) CBSR (two TX CBSR) corresponding to the first CMR group (TRP #1), a two-transmission CBSR (two TX CBSR) corresponding to the second CMR group (TRP #2), a more-than-two-transmission (transmission using more than two ports) CBSR (more than two TX CBSR n1-n2) corresponding to the first CMR group (TRP #1), and a more-than-two-transmission CBSR (more than two TX CBSR n1-n2) corresponding to the second CMR group (TRP #2).

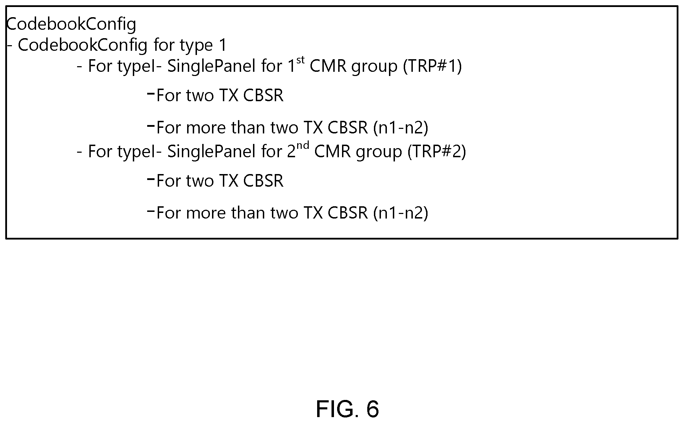

FIG. 6 is a diagram to show a second example of the codebook configuration of Aspect 1-1. In the example of FIG. 6, a two-transmission CBSR (two TX CBSR) and a more-than-two-transmission CBSR (more than two TX CBSR n1-n2) are configured as a configuration for the first (second) CMR group (TRP #1 (#2)) of Type 1 single-panel. In other words, in the example of FIG. 6, the CBSRs are separately configured (described) for each CMR group (TRP).

In other words, in the present aspect, regarding a certain number of transmissions (for example, two or a number more than two), two CBSRs may be included in one codebook configuration.

According to Aspect 1-1, the CBSR is common to those corresponding to the same CMR group (TRP), so that the number of CBSR configurations is reduced, allowing an appropriate codebook/CBSR to be configured for each CMR group (TRP).

### [Aspect 1-2]

The UE may receive a codebook configuration including a CBSR configuration for each measurement hypothesis (single-TRP measurement hypothesis/NCJT measurement hypothesis). In other words, the UE may receive, by higher layer signaling, a codebook configuration including a CBSR configuration corresponding to a CSI measurement for single-TRP and a CBSR configuration corresponding to a CSI measurement for NCJT that are configured separately. For example, the UE applies a corresponding/related first CBSR to a single-TRP measurement (corresponding to the first or second CMR group). With respect to an NCJT measurement corresponding to a CMR pair, the UE applies a corresponding second CBSR to CMRs of the plurality of CMR groups.

In other words, in Aspect 1-2, the CBSR for the single-TRP measurement may be different from the CBSR for the NCJT measurement, and the CBSRs corresponding to the same measurement hypothesis and corresponding to the respective different CMR groups (TRPs) may be common.

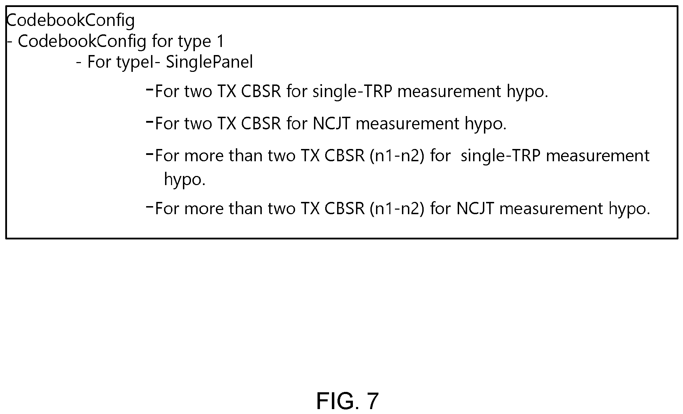

FIG. 7 is a diagram to show a first example of the codebook configuration of Aspect 1-2. In the example of FIG. 7, a configuration for Type 1 single-panel includes a two-transmission CBSR (two TX CBSR) corresponding to a single-TRP measurement hypothesis, a two-transmission CBSR (two TX CBSR) corresponding to an NCJT measurement hypothesis, a more-than-two-transmission CBSR (more than two TX CBSR n1-n2) corresponding to a single-TRP measurement hypothesis, and a more-than-two-transmission CBSR (more than two TX CBSR n1-n2) corresponding to an NCJT measurement hypothesis.

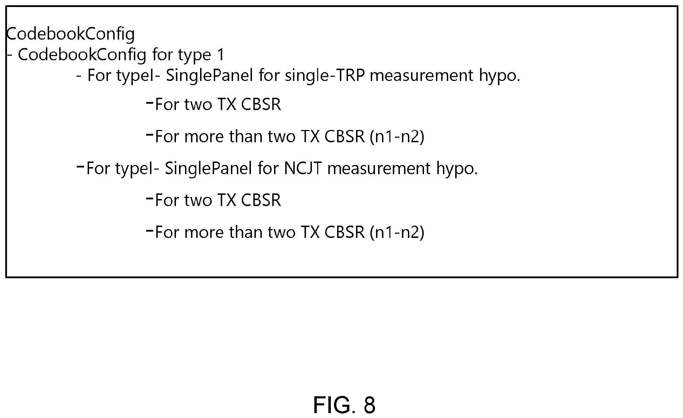

FIG. 8 is a diagram to show a second example of the codebook configuration of Aspect 1-2. In the example of FIG. 8, a two-transmission CBSR (two TX CBSR) and a more-than-two-transmission CBSR (more than two TX CBSR n1-n2) are configured as each of a configuration corresponding to a single-TRP measurement hypothesis of Type 1 single-panel and a configuration corresponding to an NCJT measurement hypothesis of Type 1 single-panel. In other words, in the example of FIG. 8, the CBSRs are separately configured (described) for each measurement hypothesis (single-TRP measurement hypothesis/NCJT measurement hypothesis).

In other words, in the present aspect, regarding a certain number of transmissions (for example, two or a number more than two), two CBSRs may be included in one codebook configuration.

According to Aspect 1-2, the CBSRs corresponding to the same measurement hypothesis (single-TRP measurement hypothesis/NCJT measurement hypothesis) are common, so that the number of CBSR configurations is reduced, allowing an appropriate codebook/CBSR to be configured for each measurement hypothesis.

### [Aspect 1-3]

The UE may receive, by higher layer signaling, a codebook configuration including separate CBSR configurations for a single-TRP measurement corresponding to the first CMR group (TRP #1), a single-TRP measurement corresponding to the second CMR group (TRP #2), and an NCJT measurement. For example, the UE applies a corresponding/related CBSR to each of the single-TRP measurement corresponding to the first CMR group and the single-TRP measurement corresponding to the second CMR group. With respect to the NCJT measurement corresponding to a CMR pair, the UE applies a corresponding CBSR to CMRs of the plurality of CMR groups.

In other words, in Aspect 1-3, the CBSR for the single-TRP measurement corresponding to the first CMR group (TRP #1) may be different from the CBSR for the single-TRP measurement corresponding to the second CMR group (TRP #2). The CBSRs for the NCJT measurement corresponding to the respective different CMR groups (TRPs) may be common.

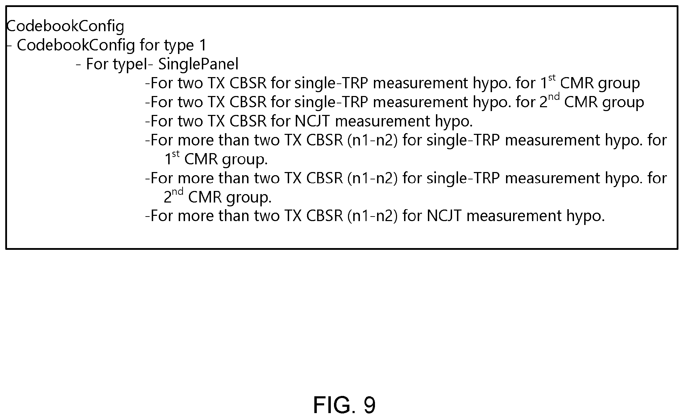

FIG. 9 is a diagram to show a first example of the codebook configuration of Aspect 1-3. In the example of FIG. 9, a configuration for Type 1 single-panel includes a two-transmission CBSR (two TX CBSR) corresponding to the first CMR group and a single-TRP measurement hypothesis, a two-transmission CBSR (two TX CBSR) corresponding to the second CMR group and a single-TRP measurement, a two-transmission CBSR (two TX CBSR) corresponding to an NCJT measurement hypothesis, a more-than-two-transmission CBSR (more than two TX CBSR n1-n2) corresponding to the first CMR group and a single-TRP measurement, a more-than-two-transmission CBSR (more than two TX CBSR n1-n2) corresponding to the second CMR group and a single-TRP measurement, and a more-than-two-transmission CBSR (more than two TX CBSR n1-n2) corresponding to an NCJT measurement hypothesis.

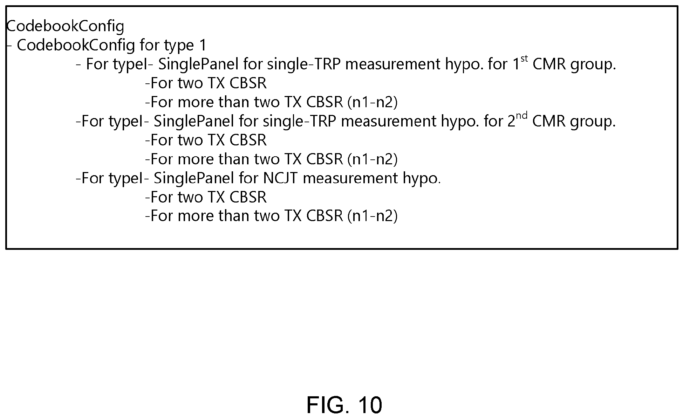

FIG. 10 is a diagram to show a second example of the codebook configuration of Aspect 1-3. In the example of FIG. 10, a two-transmission CBSR (two TX CBSR) and a more-than-two-transmission CBSR (more than two TX CBSR n1-n2) are configured as each of a configuration corresponding to the first CMR group and a single-TRP measurement hypothesis of Type 1 single-panel, a configuration corresponding to the second CMR group and a single-TRP measurement hypothesis of Type 1 single-panel, and a configuration corresponding to an NCJT measurement hypothesis of Type 1 single-panel. In other words, in the example of FIG. 10, with respect to the single-TRP measurement hypothesis, the CBSRs are separately configured (described) for each CMR group, and besides the CBSRs for the single-TRP measurement hypothesis, the CBSRs with respect to the NCJT measurement hypothesis are configured (described).

In other words, in the present aspect, regarding a certain number of transmissions (for example, two or a number more than two), three CBSRs may be included in one codebook configuration.

According to Aspect 1-3, with respect to the single-TRP measurement hypothesis, the appropriate codebook/CBSR is configured for each CMR group (TRP), and the CBSRs corresponding to the NCJT measurement hypothesis are common, allowing the number of CBSR configurations to be reduced.

### [Aspect 1-4]

The UE may receive, by higher layer signaling, a codebook configuration including separate CBSR configurations for a single-TRP measurement, an NCJT measurement corresponding to the first CMR group (TRP #1), and an NCJT measurement corresponding to the second CMR group (TRP #2). For example, the UE applies a corresponding/related CBSR to the single-TRP measurement (corresponding to the first or second CMR group). The UE applies a corresponding CBSR to each of the NCJT measurement corresponding to a CMR pair and corresponding to the first CMR group (TRP #1) and the NCJT measurement corresponding to a CMR pair and corresponding to the second CMR group (TRP #1).

In other words, in Aspect 1-4, the CBSRs for the single-TRP measurement corresponding to the respective different CMR groups (TRPs) may be common. The CBSR for the NCJT measurement corresponding to the first CMR group (TRP #1) may be different from the CBSR for the NCJT measurement corresponding to the second CMR group (TRP #2).

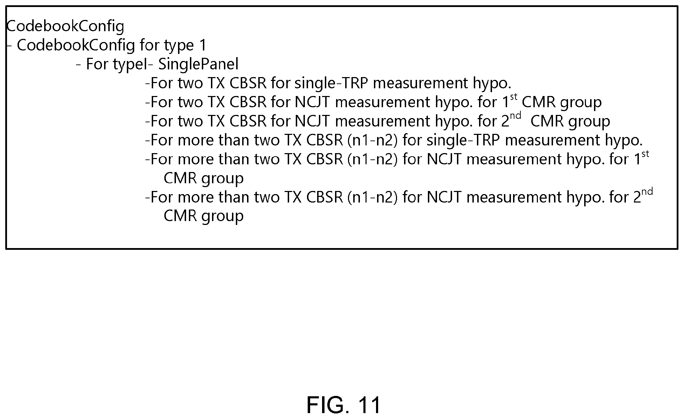

FIG. 11 is a diagram to show a first example of the codebook configuration of Aspect 1-4. In the example of FIG. 11, a configuration for Type 1 single-panel includes a CBSR (two TX CBSR) corresponding to a single-TRP measurement hypothesis, a two-transmission CBSR (two TX CBSR) corresponding to the first CMR group and an NCJT measurement hypothesis, a two-transmission CBSR (two TX CBSR) corresponding to the second CMR group and an NCJT measurement hypothesis, a more-than-two-transmission CBSR (more than two TX CBSR n1-n2) for a single-TRP measurement, a more-than-two-transmission CBSR (more than two TX CBSR n1-n2) corresponding to the first CMR group and an NCJT measurement hypothesis, and a more-than-two-transmission CBSR (more than two TX CBSR n1-n2) corresponding to the second CMR group and an NCJT measurement hypothesis.

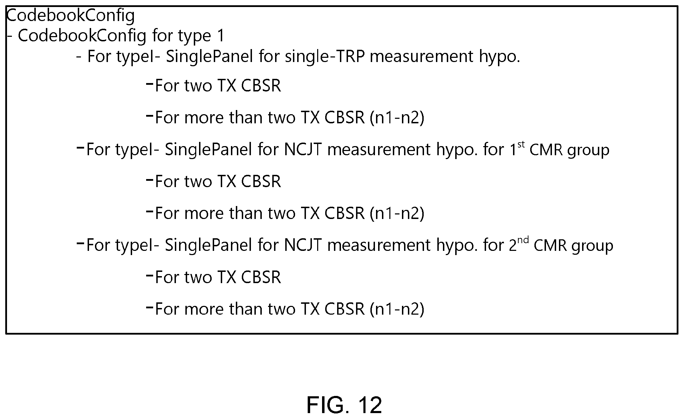

FIG. 12 is a diagram to show a second example of the codebook configuration of Aspect 1-4. In the example of FIG. 12, a two-transmission CBSR (two TX CBSR) and a more-than-two-transmission CBSR (more than two TX CBSR n1-n2) are configured as each of a configuration corresponding to a single-TRP measurement hypothesis of Type 1 single-panel, a configuration corresponding to the first CMR group and an NCJT measurement hypothesis of Type 1 single-panel, and a configuration corresponding to the second CMR group and an NCJT measurement hypothesis of Type 1 single-panel. In other words, in the example of FIG. 12, the CBSRs with respect to the single-TRP measurement hypothesis are configured (described), and besides the CBSRs with respect to the single-TRP measurement hypothesis, the CBSRs with respect to the NCJT measurement hypothesis are separately configured (described) for each CMR group.

In other words, in the present aspect, regarding a certain number of transmissions (for example, two or a number more than two), three CBSRs may be included in one codebook configuration.

According to Aspect 1-4, the CBSRs corresponding to the single-TRP measurement hypothesis are common, so that the number of CBSR configurations is reduced, allowing an appropriate codebook/CBSR to be configured, with respect to the NCJT measurement hypothesis, for each CMR group (TRP).

### [Aspect 1-5]

The UE may receive, by higher layer signaling, a codebook configuration including separate CBSR configurations for a single-TRP measurement corresponding to the first CMR group (TRP #1), a single-TRP measurement corresponding to the second CMR group (TRP #2), an NCJT measurement corresponding to the first CMR group (TRP #1), and an NCJT measurement corresponding to the second CMR group (TRP #2). For example, the UE applies a corresponding/related CBSR to each of the single-TRP measurement corresponding to the first CMR group and the single-TRP measurement corresponding to the second CMR group. The UE applies a corresponding CBSR to each of the NCJT measurement corresponding to a CMR pair and corresponding to the first CMR group (TRP #1) and the NCJT measurement corresponding to a CMR pair and corresponding to the second CMR group (TRP #1).

In other words, in Aspect 1-5, the CBSR for the single-TRP measurement corresponding to the first CMR group (TRP #1), the CBSR for the single-TRP measurement corresponding to the second CMR group (TRP #2), the CBSR for the NCJT measurement corresponding to the first CMR group (TRP #1), and the CBSR for the NCJT measurement corresponding to the second CMR group (TRP #2) may be different from one another.

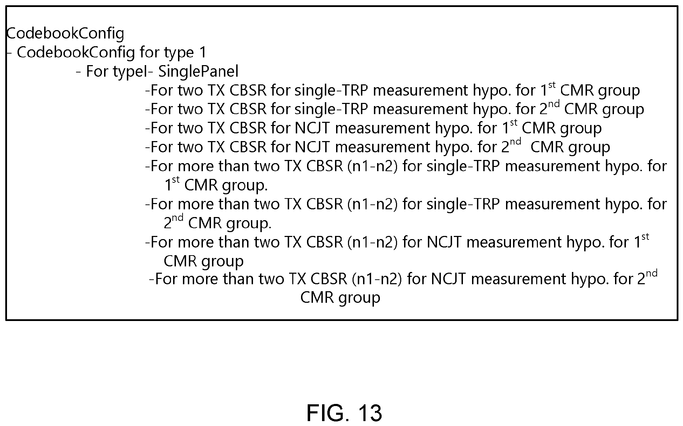

FIG. 13 is a diagram to show a first example of the codebook configuration of Aspect 1-5. In the example of FIG. 13, a configuration for Type 1 single-panel includes a CBSR (two TX CBSR) corresponding to the first CMR group and a single-TRP measurement hypothesis, a CBSR (two TX CBSR) corresponding to the second CMR group and a single-TRP measurement hypothesis, a two-transmission CBSR (two TX CBSR) corresponding to the first CMR group and an NCJT measurement hypothesis, and a two-transmission CBSR (two TX CBSR) corresponding to the second CMR group and an NCJT measurement hypothesis.

In the example of FIG. 13, a configuration for Type 1 single-panel includes a more-than-two-transmission CBSR (more than two TX CBSR n1-n2) corresponding to the first CMR group and a single-TRP measurement, a more-than-two-transmission CBSR (more than two TX CBSR n1-n2) corresponding to the second CMR group and a single-TRP measurement, a more-than-two-transmission CBSR (more than two TX CBSR n1-n2) corresponding to the first CMR group and an NCJT measurement hypothesis, and a more-than-two-transmission CBSR (more than two TX CBSR n1-n2) corresponding to the second CMR group and an NCJT measurement hypothesis.

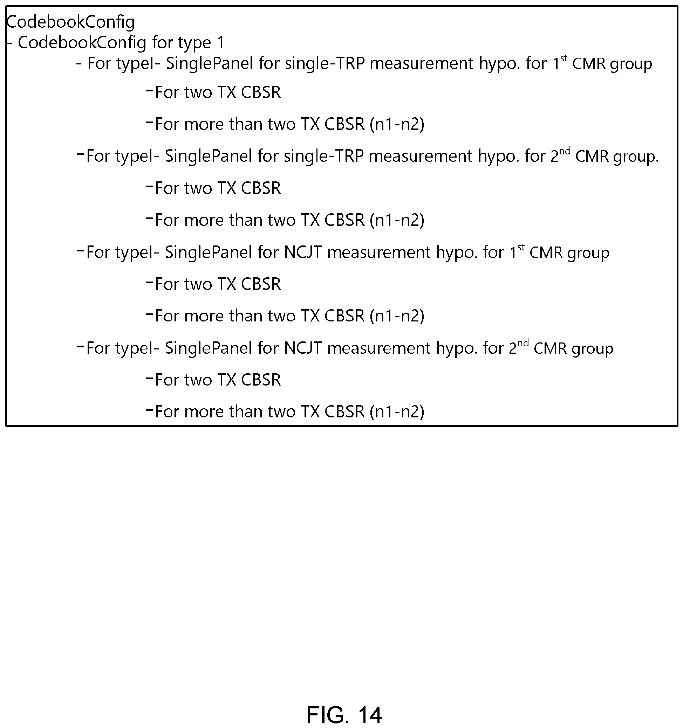

FIG. 14 is a diagram to show a second example of the codebook configuration of Aspect 1-5. In the example of FIG. 14, a two-transmission CBSR (two TX CBSR) and a more-than-two-transmission CBSR (more than two TX CBSR n1-n2) are configured as each of a configuration corresponding to the first CMR group and a single-TRP measurement hypothesis of Type 1 single-panel, a configuration corresponding to the second CMR group and a single-TRP measurement hypothesis of Type 1 single-panel, a configuration corresponding to the first CMR group and an NCJT measurement hypothesis of Type 1 single-panel, and a configuration corresponding to the second CMR group and an NCJT measurement hypothesis of Type 1 single-panel. In other words, in the example of FIG. 14, the CBSRs with respect to the single-TRP measurement hypothesis are separately configured (described) for each TRP, and besides the CBSRs with respect to the single-TRP measurement hypothesis, the CBSRs with respect to the NCJT measurement hypothesis are separately configured (described) for each CMR group.

In other words, in the present aspect, regarding a certain number of transmissions (for example, two or a number more than two), four CBSRs may be included in one codebook configuration.

According to Aspect 1-5, with respect to the single-TRP measurement hypothesis, an appropriate codebook/CBSR is possible to be configured for each CMR group (TRP). With respect to the NCJT measurement hypothesis, an appropriate codebook/CBSR is possible to be configured for each CMR group (TRP).

### <Second Embodiment>

Although, in the first embodiment, the codebook configuration indicated in each aspect is applied to, for example, 3GPP Rel. 17 or Rel. 18 or later versions, the codebook configuration may include a configuration for Rel. 15/16 and a configuration to be added in Rel. 17 or Rel. 18 or later versions. Note that, although "r17" in parameters in the present embodiment means Rel. 17, parameters corresponding to another release may be applied.

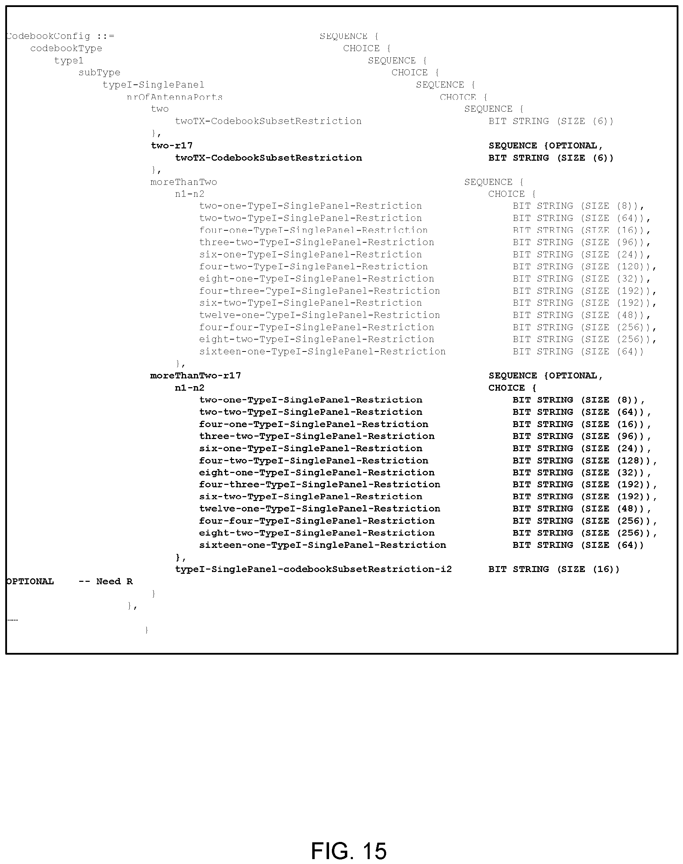

FIG. 15 is a diagram to show an example of a codebook configuration according to a second embodiment, the example corresponding to the first example of Aspect 1-1. In the example of FIG. 15, a configuration for Type 1 single-panel includes a two-transmission CBSR ("twoTX-CodebookSubsetRestriction" in "two") reusing a configuration in Rel. 15/16 and a two-transmission CBSR ("twoTX-CodebookSubsetRestriction" in "two-r17") to be added in Rel. 17. When a CSI measurement for NCJT is configured, the CBSR configuration in "two" may correspond to the first CMR group. When a CSI measurement for NCJT is configured, the CBSR configuration in "two-r17" may correspond to the second CMR group.

Further, in the example of FIG. 15, a configuration of Type 1 single-panel codebook includes a more-than-two-transmission CBSR ("n1-n2" in "moreThanTwo") reusing a configuration in Rel. 15/16 and a more-than-two-transmission CBSR ("n1-n2" in "moreThanTwo-r17") to be added in Rel. 17. When a CSI measurement for NCJT is configured, the CBSR configuration in "moreThanTwo" may correspond to the first CMR group. When a CSI measurement for NCJT is configured, the CBSR configuration in "moreThanTwo-r17" may correspond to the second CMR group.

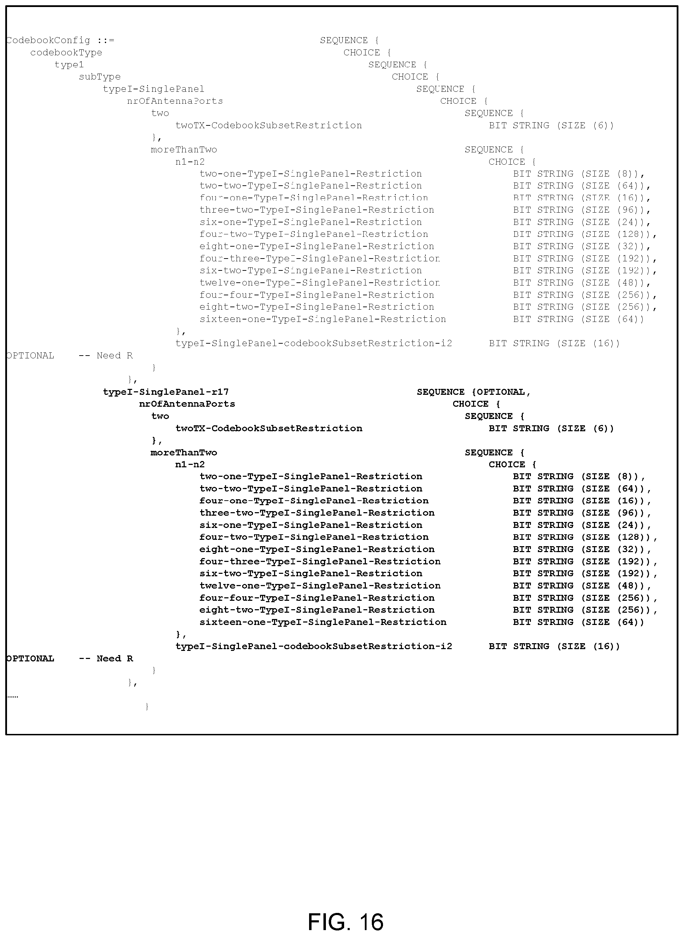

FIG. 16 is a diagram to show an example of the codebook configuration according to the second embodiment, the example corresponding to the second example of Aspect 1-1. In the example of FIG. 16, a configuration of Type 1 single-panel (configuration in "typeI-SinglePanel") reusing a configuration in Rel. 15/16 and a configuration of Type 1 single-panel codebook ("typeI-SinglePanel-r17") to be added in Rel. 17 are included. When a CSI measurement for NCJT is configured, the configuration in "typeI-SinglePanel" may correspond to the first CMR group. When a CSI measurement for NCJT is configured, the configuration in "typeI-SinglePanel-r17" may correspond to the second CMR group.

Further, for the examples of Aspect 1-2 to Aspect 1-5, the codebook configuration may include a configuration for Rel. 15/16 and a configuration to be added in Rel. 17 or Rel. 18 or later versions. For example, in Aspect 1-2, a configuration for Rel. 15/16 may be reused for the CBSR for the single-TRP measurement, and the CBSR for the NCJT measurement may be used for a configuration to be added in Rel. 17 or Rel. 18 or later versions.

### <UE Capability>

A UE may transmit (report), to a network (base station), UE capability information indicating whether to support at least one of the processes in the present disclosure. At least one of the examples of the present disclosure may be applied only to a UE that has transmitted specific UE capability information or a UE that supports the specific UE capability. The UE may receive information indicating/configuring at least one of the examples of the present disclosure by higher layer signaling/physical layer signaling. The information may correspond to the UE capability information transmitted by the UE. The UE capability information may be, for example, at least one of (1) and (2).

(1) Whether to support at least one of the examples of the zeroth embodiment, Aspect 1-1 to Aspect 1-5 of the first embodiment, and the second embodiment.
(2) Whether to support application of an existing (for example, Rel-15/16) CBSR configuration, in a CSI report configuration for NCJT.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

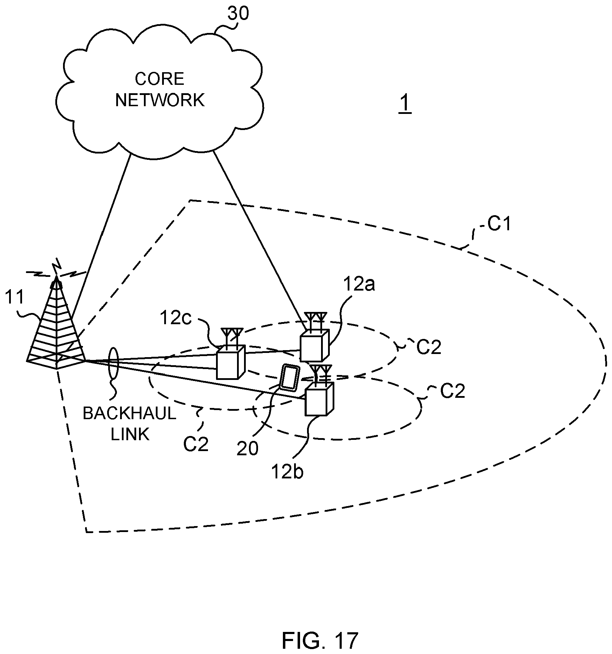

FIG. 17 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

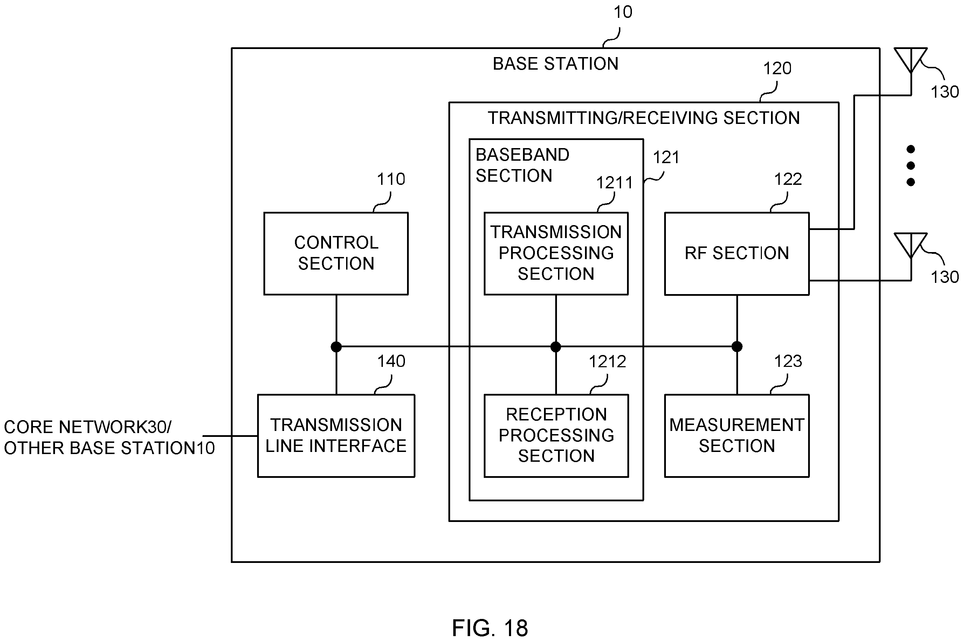

FIG. 18 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may transmit a codebook configuration including a codebook subset restriction (CBSR) configuration corresponding to a channel state information (CSI) measurement for single transmission/reception point (single-TRP) and a CBSR configuration corresponding to a CSI measurement for non-coherent joint transmission (NCJT).

The control section 110 may control reception of a corresponding CSI report based on each CBSR configuration.

### (User Terminal)

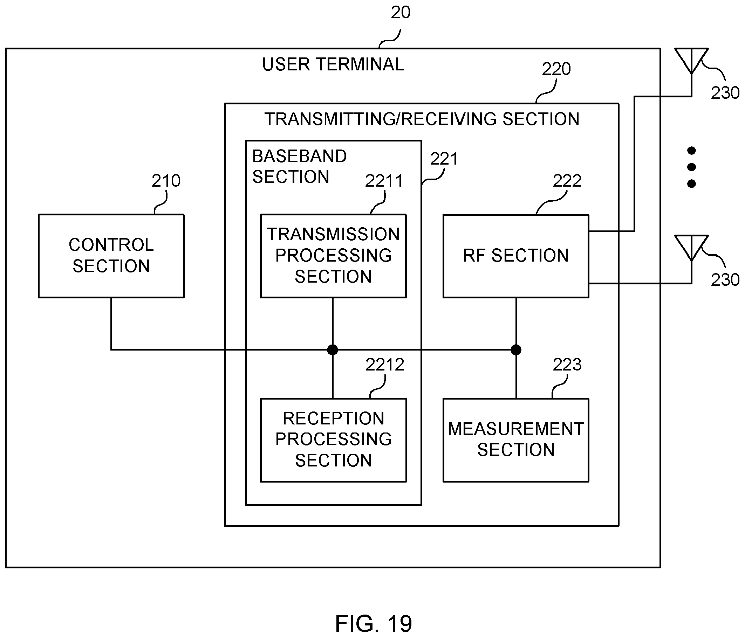

FIG. 19 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may receive a codebook configuration including a codebook subset restriction (CBSR) configuration corresponding to a channel state information (CSI) measurement for single transmission/reception point (single-TRP) and a CBSR configuration corresponding to a CSI measurement for non-coherent joint transmission (NCJT).

The transmitting/receiving section 220 may receive, by higher layer signaling, the codebook configuration including the CBSR configuration per CSI reference signal resource for channel measurement (CMR) group.

The transmitting/receiving section 220 may receive, by higher layer signaling, the codebook configuration including the CBSR configuration corresponding to the CSI measurement for single-TRP and the CBSR configuration corresponding to the CSI measurement for NCJT that are configured separately.

The transmitting/receiving section 220 may receive, by higher layer signaling, the codebook configuration including the separate CBSR configurations, the respective CBSR configurations corresponding to a CSI measurement for single-TRP corresponding to a first CMR group, a CSI measurement for single-TRP corresponding to a second CMR group, a CSI measurement for NCJT corresponding to the first CMR group, and a CSI measurement for NCJT corresponding to the second CMR group.

The control section 210 may control, based on each CBSR configuration, a corresponding CSI measurement.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

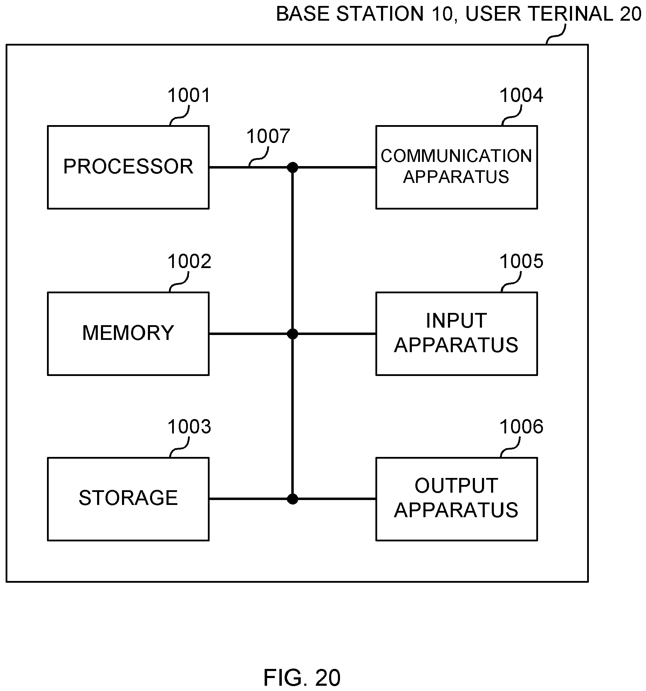

For example, a base station, a user terminal, and so on according to one embodiment of the present disclosure may function as a computer that executes the processes of the radio communication method of the present disclosure. FIG. 20 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings.

For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be notified using, for example, MAC control elements (MAC CEs).

Also, notification of certain information (for example, notification of "being X") does not necessarily have to be notified explicitly, and can be notified implicitly (by, for example, not notifying this certain information or notifying another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, and these are not restrictive. The moving object may be a moving object that autonomously travels based on a direction for moving.

The moving object may be a vehicle (for example, a car, an airplane, and the like), may be a moving object which moves unmanned (for example, a drone, an autonomous vehicle, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

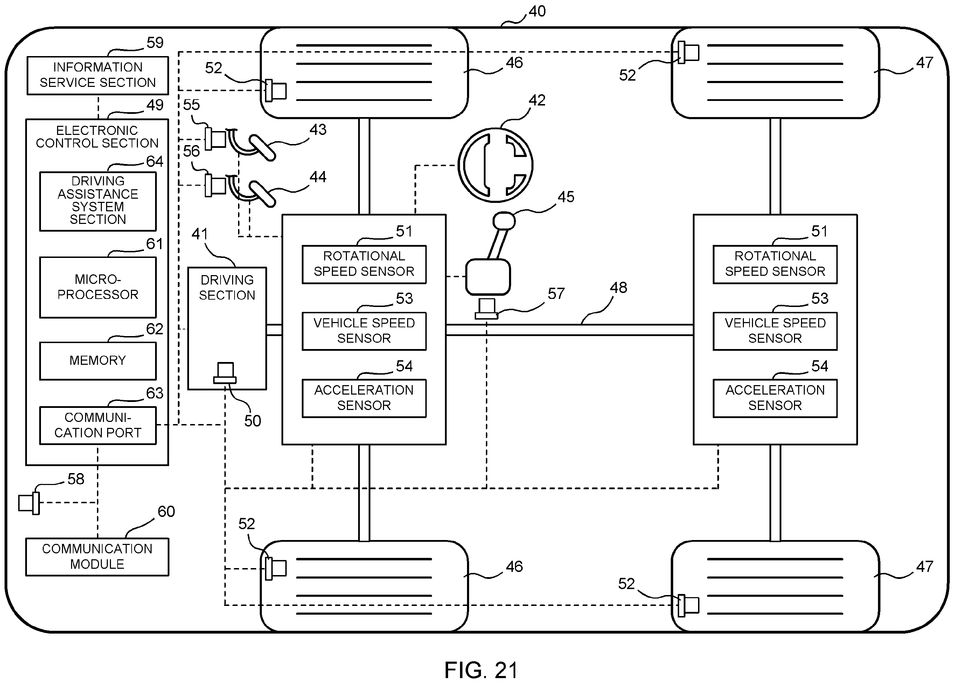

FIG. 21 is a diagram to show an example of a vehicle according to one embodiment. As shown in FIG. 21, a vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, rotational speed sensors 51, pneumatic sensors 52, vehicle speed sensors 53, acceleration sensors 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, rotational speed signals of the front wheels 46/rear wheels 47 acquired by the rotational speed sensors 51, pneumatic signals of the front wheels 46/rear wheels 47 acquired by the pneumatic sensors 52, vehicle speed signals acquired by the vehicle speed sensors 53, acceleration signals acquired by the acceleration sensors 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, the base station 10, the user terminal 20, or the like described above (may function as the base station 10, the user terminal 20, or the like).

The communication module 60 may transmit signals from the various sensors 50 to 58 described above input to the electronic control section 49 and information obtained based on the signals, to the external apparatus via radio communication.

The communication module 60 receives various pieces of information (traffic information, signal information, inter-vehicle distance information, and the like) transmitted from the external apparatus, and displays the various pieces of information on the information service section 59 included in the vehicle. The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives a codebook configuration including a codebook subset restriction (CBSR) configuration corresponding to a channel state information (CSI) measurement for single transmission/reception point (single-TRP) and a CBSR configuration corresponding to a CSI measurement for non-coherent joint transmission (NCJT); and
a control section that controls, based on each CBSR configuration, a corresponding CSI measurement.

2. The terminal according to claim 1, wherein
the receiving section receives, by higher layer signaling, the codebook configuration including the CBSR configuration per CSI reference signal resource for channel measurement (CMR) group.

3. The terminal according to claim 1, wherein
the receiving section receives, by higher layer signaling, the codebook configuration including the CBSR configuration corresponding to the CSI measurement for single-TRP and the CBSR configuration corresponding to the CSI measurement for NCJT that are configured separately.

4. The terminal according to claim 1, wherein
the receiving section receives, by higher layer signaling, the codebook configuration including the separate CBSR configurations, the respective CBSR configurations corresponding to a CSI measurement for single-TRP corresponding to a first CMR group, a CSI measurement for single-TRP corresponding to a second CMR group, a CSI measurement for NCJT corresponding to the first CMR group, and a CSI measurement for NCJT corresponding to the second CMR group.

5. A radio communication method for a terminal, the radio communication method comprising:
receiving a codebook configuration including a codebook subset restriction (CBSR) configuration corresponding to a channel state information (CSI) measurement for single transmission/reception point (single-TRP) and a CBSR configuration corresponding to a CSI measurement for non-coherent joint transmission (NCJT); and
controlling, based on each CBSR configuration, a corresponding CSI measurement.

6. A base station comprising:
a transmitting section that transmits a codebook configuration including a codebook subset restriction (CBSR) configuration corresponding to a channel state information (CSI) measurement for single transmission/reception point (single-TRP) and a CBSR configuration corresponding to a CSI measurement for non-coherent joint transmission (NCJT); and
a control section that controls reception of a corresponding CSI report based on each CBSR configuration.
